# EUROPEAN PATENT SPECIFICATION

(11) **EP 2 172 753 B1**
(45) Date of publication and mention of the grant of the patent: **18.05.2011**
(21) Application number: 08017464.2
(22) Date of filing: 06.10.2008
(51) Int. Cl.: G01J 5/02, G01J 5/04, G01J 5/12, B81B 7/00, G01J 5/08

(54) **A method for manufacturing infrared sensor on a wafer basis**
Verfahren zur Herstellung von Infrarotsensoren auf Wafer-Basis
Procédé de fabrication d'un capteur à infrarouges sur la base d'un wafer

(43) Date of publication of application: 07.04.2010
(73) Proprietor: Sensirion AG, 8712 Stäfa (CH)
(72) Inventor: Streiff, Matthias, 8006 Zürich (CH); Sunier, Robert, 8046 Zürich (CH); Mayer, Felix, 8712 Stäfa (CH)
(74) Representative: Sutter, Kurt

(56) References cited:
- EP-A- 1 772 717
- DE-A1-102004 031 315
- US-A1- 2003 141 455
- US-A1- 2005 017 175

## Description

The invention relates to a method for manufacturing infrared sensors on a wafer basis.

Infrared sensors for measuring radiation in the spectral range between 800 nm and 20 µm have a variety of applications, such as for contact-less temperature measurement as well as infrared spectroscopy.

A sensor of this type is described in DE 10 2004 002 163. It comprises a temperature sensor arranged on a membrane in a vacuum cavity. A bandpass filter is mounted to the top of this cap. Infrared light passing through the bandpass filter and the cap reaches the temperature sensor and heats it up, which allows to measure the amount of light.

US 2003/01241455 A1 discloses an infrared sensor in which the temperature of an absorber absorbing infrared light is measured by means of thermopiles. Reflecting surfaces form a cavity of a light concentrator for concentrating incident infrared light. Wafers of such light concentrators and entire wafers of measurement bodies are produced prior to assembly. A wafer of light concentrators is joined to a wafer of bodies.

DE 10 2004 031 315 A1 refers to an infrared sensor comprising a sensor chip and a cap chip to be fastened to the sensor chip. The cap chip may provide a filter for selectively passing certain wave lengths and absorbing others. The sensor may be manufactured based on wafers.

The problem to be solved by the present invention is to provide a method that allows an efficient manufacturing of such sensors.

This problem is solved by the method of claim 1.

Accordingly, a plurality of core sensors is provided on a base wafer, with each core sensor comprising at least one temperature sensor. A filter wafer is mounted to the base wafer in order to cover the temperature sensors thereon. Thus, a sensor assembly is formed, where, for each temperature sensor, the filter wafer forms an infrared filter element, such as a bandpass filter. Finally, the sensor assembly is separated (diced) into a plurality of infrared sensors.

In this method the need to individually apply a filter to each sensor is dispensed with. Rather, all sensors on a wafer can be equipped with their filters in one single step.

The filter wafer comprises a carrier layer, in particular of silicon, as well as a filter layer. The filter layer can then be structured for creating an array of regions having differing spectral transmissions, which allows to manufacture sensors that are able to carry out measurements at differing spectral channels.

In a particularly advantageous embodiment this scheme is refined by providing a filter wafer having two different filters arranged on top of each other. The first filter is structured from a first side, while the second filter can (optionally) be structured from the second side.

Other advantageous embodiments are described in the dependent claims as well as in the following description. The description refers to the enclosed figures, wherein:
Fig. 1 is a top view of a first example of a core sensor,
Fig. 2 is a sectional view along line II-II of Fig. 1,
Fig. 3 is a sectional view along line III-III of Fig. 1,
Fig. 4 is a sectional view of a second example of a core sensor, corresponding to the view of Fig. 3,
Fig. 5 is a first example of an infrared sensor based on the first core sensor,
Fig. 6 is a second example of an infrared sensor based on the second core sensor,
Fig. 7 is a first step of a process for manufacturing the sensor of Fig. 6,
Fig. 8 is a second step of same process,
Fig. 9 is a third example of an infrared sensor for two-channel measurements,
Fig. 10 is a first step of a process for manufacturing the sensor of Fig. 9,
Fig. 11 is a second step of the same process, and
Fig. 12 is a third step of the same process,
Fig. 13 is a fourth example of an infrared sensor, also for two-channel measurements,
Fig. 14 is a fifth example of an infrared sensor, also for two-channel measurements, and
Fig. 15 is a sixth example of an infrared sensor, also for two-channel measurements.

### Definitions:

Terms of the type "up", "top", "above" and "over", as well as "down", "bottom", "beneath" and "below" refer an orientation of sensor where the membrane is on the top side thereof. In other words, the membrane defines the top side of the substrate and the direction between the membrane side of the substrate and the opposite side of the substrate is the top down direction.

The statement that the filter wafer is "covering" the temperature sensors is to be understood such that the filter wafer can either be below or above the temperature sensors, but it has a lateral extension sufficient to filter the incoming light for all temperature sensors.

An "infrared bandpass filter" is a filter that allows transmission of part of the infrared spectrum. Such filters can be broad or narrow and they e.g. include interference filters.

Two filter transmission characteristics are assumed to be "identical" or "equal" if their quotient is equal for all wavelengths. In other words, transmission characteristics that differ by a multiplicative factor only are considered to be equal.

The statement "a temperature sensor is arranged on the membrane" is to be understood such that the temperature sensor can be arranged on top of, within or below the membrane and is mechanically connected to and held by the membrane.

### The core sensor:

The present sensor is based on a "core sensor" comprising a substrate carrying at least one temperature sensor. This type of device is known to the skilled person. Its purpose is to suspend the temperature sensor in such a manner that it is thermally well insulated and allows to detect a temperature change even for low intensity infrared light.

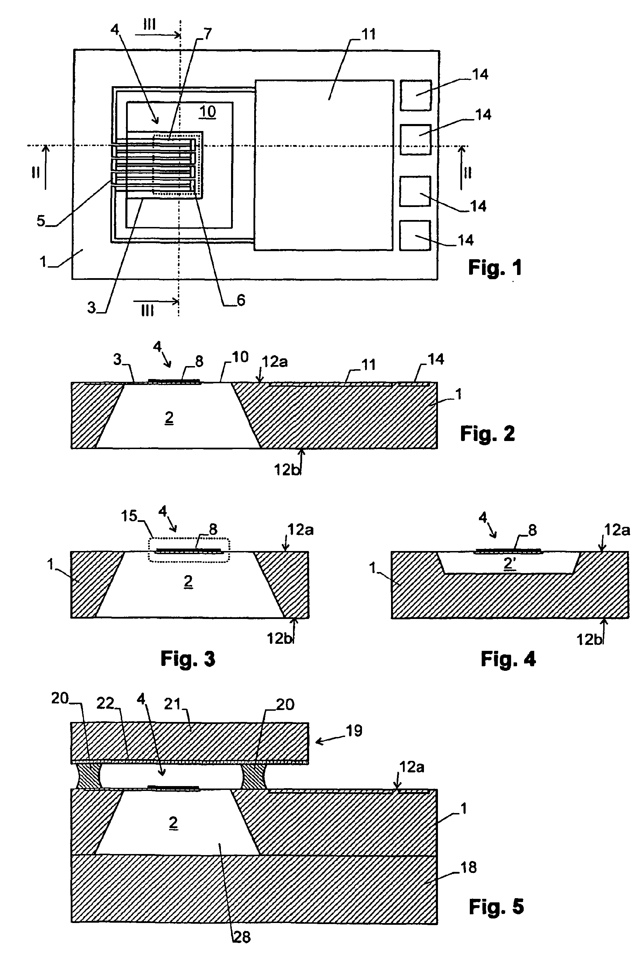

A first example of such a core sensor is shown in Figs. 1 - 3. It comprises a substrate 1. Substrate 1 has an opening 2 formed therein, which has e.g. been manufactured by anisotropic etching. A membrane 3 is arranged over opening 2. Membrane 3 has e.g. been formed by applying one or more dielectric layers to the top of substrate 2 prior to etching opening 2.

A temperature sensor 4 is arranged on membrane 3. In the example shown here, temperature sensor 4 is formed by a thermopile comprising a plurality of thermoelements having a first and a second series of junctions 5, 6 connected by leads 7 of two different types of materials, such as polysilicon and metal. The first series 5 of junctions is arranged over the bulk of substrate 1, while the second series 6 of junctions, which corresponds to temperature sensor 4, is located on membrane 3 above opening 2. Thus, the thermopile basically generates a voltage dependent on the temperature difference between the locations of the second series 6 of junctions on membrane 3 and the first series 5 of junctions on substrate 1. This type of arrangement is generally known to the skilled person. By way of example, we refer to EP 1 840 535, which shows a similar structure used for a flow sensor.

As the thermopile measures merely the temperature difference between its two contact rows 5, 6, it can be advantageous to provide, in addition thereto, an absolute temperature sensor, such as a band gap temperature sensor, on substrate 1.

Alternatively to using a thermopile, any other suitable type of temperature sensor, such as a resistive sensor, can be used as well.

An infrared absorber layer 8 is mounted to the top of membrane 3, covering at least the second series 6 of junctions. Its purpose is to increase the absorption of the incoming infrared light and to thereby increase the efficiency of the device. Absorber layer 8 can e.g. be a metal layer, such as aluminum.

As can be seen from Fig. 1, membrane 3 advantageously does not cover all of opening 2, but extends in tongue-like fashion from one side thereof. Hence, a gap 10 is formed on three sides of membrane 3, further increasing its thermal insulation.

Advantageously, substrate 1 is a semiconductor substrate, in particular a silicon substrate. Thus, it can carry integrated circuitry 11, advantageously at its top side 12a, such as amplifiers, analog/digital converters and digital circuitry.

Furthermore, a plurality of bond pads 14 is arranged on top side 12a of substrate 1. They serve to connect circuitry 11 and/or temperature sensor 4 to external devices.

Optionally, temperature sensor 4 can be insulated against heat transfer by means of an insulating coating, in particular an insulation layer of a nanoporous material, as indicated in dotted lines by reference numeral 15 in Fig. 3. This type of material, which consists of a solid having a large volume fraction of pores of sub-micrometer size, is known to reduce thermal conductivity by limiting the path length of gas molecules. A description of such materials as well as of the related manufacturing methods can e.g. be found in EP 1 772 717. Such an insulation can be added to any of the infrared sensors described below - it is useful even if temperature sensor 4 is placed in a vacuum cavity because it still is able to reduce thermal conductance effects due to residual gas molecules.

Insulating material 15 should be transparent for the infrared light to be measured.

A second embodiment of a core sensor is shown in Fig. 4. It differs from the one of Figs. 1 - 3 only by the fact that a recess 2' is provided in the top side 12a of substrate 1 instead of opening 2. Recess 2' can e.g. also be formed by anisotropic etching, but the etching process takes place from the top side 12a and is stopped when recess 2' has reached the desired depth.

The core sensor of Figs. 1 - 4 can mostly be manufactured e.g. using standard CMOS-processes. Only the formation of opening 2 or recess 2' is carried out separately, e.g. using a special etching step as described above.

### The infrared sensor:

Even though the core sensor as described above is basically able to operate as an infrared sensor, in the context of the present invention an infrared filter is added to the core sensor for improved selectivity.

### Example 1

The first embodiment, as shown in Fig. 5, is based on the core sensor described in reference to Figs. 1 - 3. As can be seen, the bottom end of opening 2 is closed by a cover 18, which is hermetically attached to the bottom side 12b of substrate 1. Cover 18 may e.g. be manufactured from a cover wafer that has been mounted to the bottom side of the base wafer later forming the substrates 1 and that has been cut into individual covers while dicing the base wafer.

A filter element or filter plate 19 comprising an infrared bandpass filter is mounted to the top side 12a of substrate 1 and separated from the same by means of a spacer 20. Spacer 20 is located between filter plate 19 and substrate 1 and extends all around temperature sensor 4.

If the temperature sensor is to be located in an evacuated cavity, spacer 20 can be formed by a material that provides a gas-tight seal as well as an adhesive bond with both substrate 1 and filter plate 19. Suitable materials for such a spacer are e.g. solder and glass frit.

Filter plate 19 of the embodiment of Fig. 5 is formed by a carrier layer 21 and a filter layer 22.

Carrier layer 21 is made of an IR-transparent material, such as silicon, and provides mechanical stability to filter plate 19.

Filter layer 22 is e.g. a single- or multilayer structure comprising several infrared-transparent layers of differing refractive index, such as layers of Ge, Si, and MgF₂, and forms the filter having the filtering properties as desired. This type of filters is known to the skilled person.

Filter plate 19 is mounted to spacer 20 with filter layer 22 facing temperature sensor 4. Thus, filter layer 22 is protected from mechanical wear and/or pollution.

Filter plate 19 has a substantially flat bottom side so it can be manufactured easily. The gap between temperature sensor 4 and filter plate 19, which is important for a good thermal insulation, corresponds to the height of spacer 20.

The design of the sensor of Fig. 5 allows to create a vacuum cavity 28, whose top wall is formed by filter plate 19, whose side walls are formed by spacer 20 as well as by the side walls of opening 2, and whose bottom all is formed by cover 18.

Vacuum cavity 28 can be evacuated prior to connecting filter plate 19 to spacer 20. For example, filter plate 19 can be loosely deposited on spacer 20 and the assembly can be placed in an oven, which is subsequently evacuated in order to remove the gas from chamber 28. While maintaining the vacuum within the oven, the oven is heated up in order to melt spacer 20 at least partially, whereupon spacer 20 connects itself to filter plate 19 and forms a gas tight seal upon cooling.

Further details of possible manufacturing processes follow below.

### Example 2

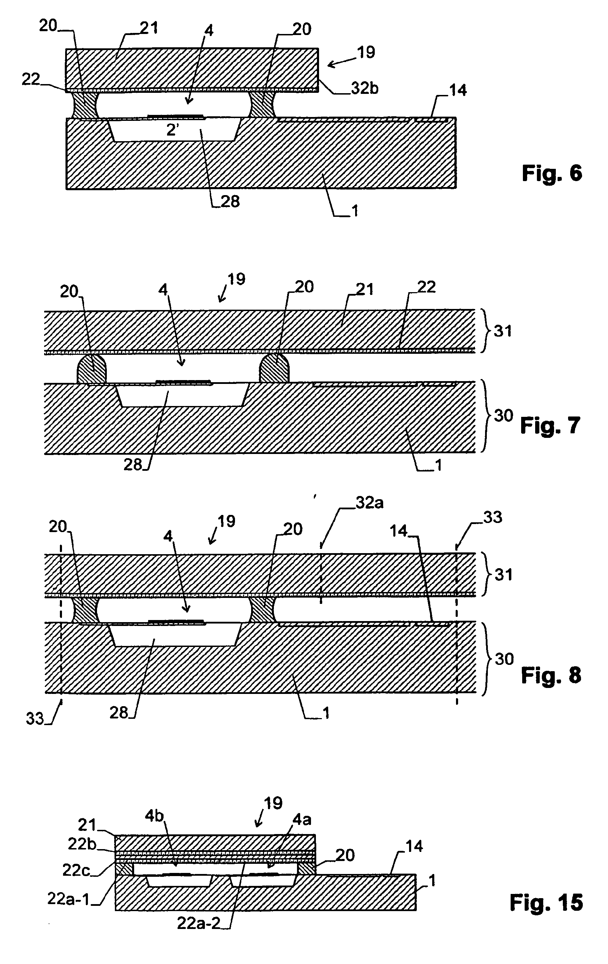

A second example of an infrared sensor based on the second example of the core sensor according to Fig. 4 is shown in Fig. 6. Even if a vacuum cavity 28 is to be formed around temperature sensor 4, in contrast to the embodiment of Fig. 5 the cover 18 can be dispensed with since the bottom of recess 28 forms the bottom of cavity 28.

### Example 3

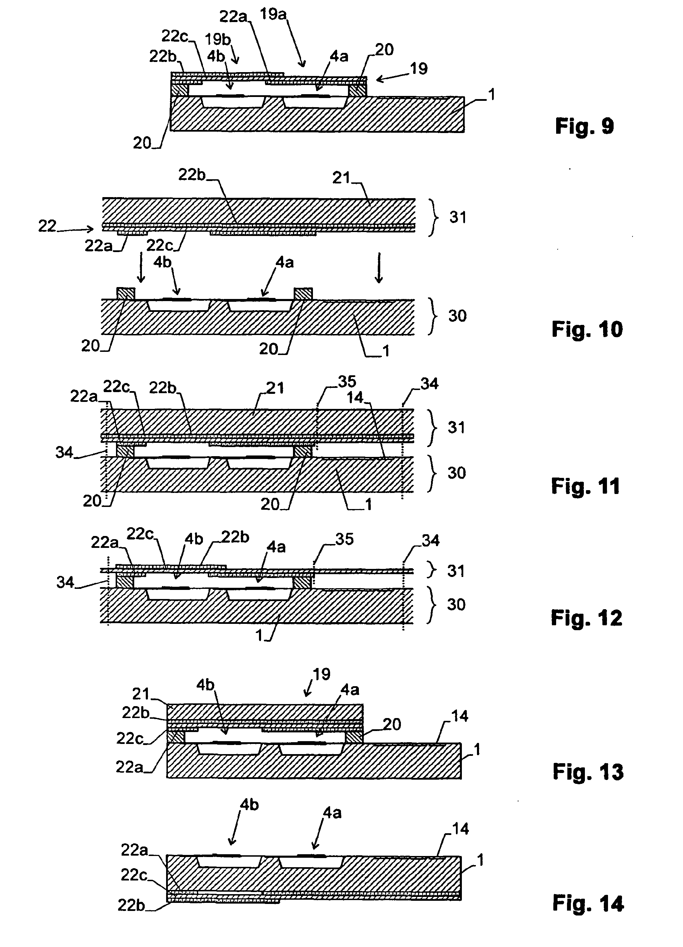

A third example of the infrared sensor is shown in Fig. 9. This example comprises two temperature sensors 4a, 4b. Filter plate 19 extends over both temperature sensors 4a, 4b and has two parts 19a, 19b having different spectral transmission characteristics. For example, part 19a is transparent in a first spectral region while part 19b is transparent in a second, different spectral region.

In the example 3, filter plate 19 has two filters 22a, 22b having differing spectral transmission characteristics. The filter 22a, 22b are separated by a separating layer 22c. Filter 22a covers only temperature sensor 4a, while filter 22b covers only the other temperature sensor 4b.

This type of sensor allows to compare the infrared radiation in the two spectral regions. For example, one spectral region may correspond to an IR absorption band of a substance to be detected, while the measurement at the other spectral region is used as a reference value.

The same technology can also be used to manufacture multi-channel sensors that allow a measurement at more than two spectral ranges. In this case, a corresponding number of different filters and temperature sensors is provided.

### Example 4

A fourth example of the sensor is shown in Fig. 13. It differs from the one of Fig. 9 in that filter plate 19 further comprises a carrier layer 21 and in that the second filter 22b is not structured and covers both sensors. In this case, the spectral range measured by second temperature sensor 4b corresponds to the overlap of the transmission ranges of both filters 4a, 4b, while the spectral range measured by first temperature sensor 4a corresponds to the whole transmission range filter 4a.

### Example 5

A fifth example of the sensor is shown in Fig. 14. It differs from those of Figs. 9 and 13 in that filter element or filter plate 19 is arranged at the bottom side of substrate 1.

In this case, substrate 1 needs to be transparent for the infrared radiation to be measured. Silicon is transparent in most of the infrared spectral range.

In the example of Fig. 14, first filter 22a covers first temperature sensor 4a only, and second filter 22b covers second temperature sensor 4b only.

### Example 6

A sixth example of the sensor is shown in Fig. 15. It differs from the one of Fig. 13 in that the first filter 22a consists of two sections 22a-1 and 22a-2. Both sections 22a-1 and 22a-2 are applied to the same side of separating layer 22b or carrier layer 21, but they have different transmission characteristics.

Optionally, and as shown in Fig. 15, they are combined with second filter 22b, just as in the preceding examples. Such a combination is advantageous because it allows to optimize the filter design. In particular, second filter 22b can e.g. be designed as a bandpass filter with a transmission extending between wavelengths L1 and L2, with L1 and L2 e.g. being several 100 or 1000 nm apart. Section 22a-1 of the first filter can be a simple low pass filter blocking all wavelengths above L1 + Δ, and section 22a-2 of the first filter can be a simple high pass filter blocking all wavelengths below L2 - Δ, with Δ being "narrow", e.g. in the order of 100 nm. Such a design allows to create two narrow band pass filters at wavelengths L1 ... L1 + Δ and L2 - Δ ... L2.

It must be noted that this type of design, where a first section 22a-1 and a second section 22a-2 are applied to a common surface, can e.g. also be applied in the sensors as shown in Fig. 9 - 14.

### Manufacturing the sensor:

Even though some possible manufacturing steps have already been described above, the following provides a more specific description of some advantageous manufacturing processes.

The described processes start by providing the core sensor, e.g. the sensor shown in Figs. 1 - 3 or Fig. 4 above. This core sensor can e.g. be formed, as described, by means of a standard CMOS process with subsequent etching in order to form opening 2 or recess 2'.

An assembly consisting of a plurality of the core sensors is provided on a wafer. This wafer will be called the "base wafer" in the following.

If the core sensor is of the type of Figs. 1 - 3, with an opening 2 reaching all the way through substrate 1, the bottom end of opening 2 can be closed by cover 18, as shown in Fig. 5 in order to form a vacuum cavity 28 if such a cavity is required. Advantageously, as mentioned, this is carried out by attaching a second wafer, the "cover wafer", to the bottom side of the base wafer, such that all openings 2 in the base wafer can be closed in a single step.

If the core sensor is of the type of Fig. 4, no cover 18 is required, even if a vacuum cavity 28 is to be manufactured.

The following processes are described with reference to a core sensor of the type of Fig. 4, but they can also be carried out with a core sensor of the type of Figs. 1 - 3.

### Manufacturing process 1

The first manufacturing process can be used for manufacturing sensors of the types shown in Figs. 5 and 6.

As shown in Fig. 7, in a first step, a plurality of spacers 20 is mounted to the base wafer 30. There is at least one spacer 20 per infrared sensor, advantageously surrounding the temperature sensor(s) of the infrared sensor.

Advantageously, in particular if a vacuum cavity 28 is to be formed, spacers 20 consist of a meltable or bondable material, such as solder, gold or glass frit.

Then, the filter wafer 31 that will form the filter plates 19 is placed from the top side 12a of sensor 1, i.e. from above, on top of the spacers 20. Filter wafer 31 covers all temperature sensors 4.

Filter wafer 31 consists e.g. of a silicon substrate that will form carrier layer 21 of the individual filter plates 19, as well as of a coating structure that will form the filter layer 22 of filter plate 19. (For simplicity, the terms "carrier layer 21" and "filter layer 22" are used to designate the corresponding parts of filter wafer 31 as well as of filter plate 19.)

Alternatively, the spacers 20 may be mounted to the bottom side of filter wafer 31, or there may be spacers mounted to both wafers 30, 31.

Filter wafer 31 is mounted such that filter layer 22 is facing base wafer 30.

In a next step, base wafer 30 with the spacers 20 and filter wafer 31 are placed in an oven and the oven is evacuated, thereby evacuating later vacuum chamber 28 because the bond between the spacers 20 and filter wafer 31 is not yet gas-tight.

The meltable material of the spacers 20 is softened by heating, such that a bond is formed between filter plate 19 and the spacers 20. Finally, the meltable material is hardened again by cooling in order to form the finished, gas-tight spacers 20. Thus, vacuum chamber 28 can be formed in a single step.

The resulting assembly is shown in Fig. 8.

Now, parts of filter wafer 31 need to be removed, namely those parts that are above the contact pads 14. For this purpose, a wafer saw can be used to cut filter wafer 31 along lines 32a (see Fig. 8) without cutting into base wafer 30, thereby forming the future edge 32b (see Fig. 6) of filter plate 19. Then, further cuts through filter wafer 31 and base wafer 30 can be carried out along lines 33 (Fig. 9) in order to dice the sensor assembly into its various sensors.

### Manufacturing process 2

In order to manufacture a sensor of the type of Fig. 9, the steps shown in Fig. 10 - 12 can be used.

In a first step, filter wafer 31 is prepared, which again comprises the carrier layer 21 and the filter layer 22. However, in order to manufacture the first and second filters 22a, 22b of the example of Fig. 9, filter layer 22 has a more complex structure than the filter layer 22 of the embodiment of Figs. 7 and 8. Namely, filter layer 22 comprises a first filter 22a and a second filter 22b having differing transmission characteristics, thereby allowing to create at least two different filtering effects. Both filters extend over the whole filter wafer 31 and are located on top of each other, with a separating layer 22c between them.

In one example each filter consists of least one dielectric layer, or several dielectric layers of differing materials. In that case, separating layer 22c is advantageously of a metal or semiconductor, in particular silicon. This has the advantage that selective etching processes can be used as described below.

Alternatively, in another example, each filter consists of at least one metal or semiconductor layer, or several such layers of differing metal or semiconductor materials. In that case, separating layer 22c is advantageously of a dielectric material, again in order to simplify the use of selective etching.

First filter 22a is arranged on a "first side" of separating layer 22c, while second filter 22b is arranged on an opposite "second side" of separating layer 22c. The second side of separating layer 22c faces carrier layer 21.

It must be noted that in the examples shown in the figures, separating layer 22c is formed by a material layer separate from carrier layer 21. However, in an alternative embodiment, first filter layer 22a can be arranged on a first side of carrier layer 21, while second filter layer 22b is arranged on a second, opposite side of carrier layer 21. In that case, carrier layer 21 forms the separating layer.

Before the description of the manufacturing process proceeds, we define the various transmission characteristics by the following terms:
- The term "first transmission characteristics" describes the total transmission characteristics of the filter or filters located in front of first temperature sensor 4a.
- The term "second transmission characteristics" describes the total transmission characteristics of the filter or filters located in front of second temperature sensor 4b. These characteristics are different from the first transmission characteristics.
- The term "third transmission characteristics" describe the transmission characteristics of the first filter 22a.
- The term "fourth transmission characteristics" describe the transmission characteristics of the second filter 22b. These characteristics are different from the third transmission characteristics.

It must be noted that in the example of Fig. 9, the first transmission characteristics are identical to the third transmission characteristics, while the second transmission characteristics are identical to the fourth transmission characteristics. In the example of Fig. 13, however, the third transmission characteristics correspond to the combination of the first and second transmission characteristics (because first as well as second filter 22a and 22b are placed in front of first temperature sensor 4a, while the second and fourth transmission characteristics are identical. In the example of Fig. 14, the first and third transmission characteristics are identical, while the fourth transmission characteristics correspond to the second transmission characteristics.

In the following manufacturing step, one or both filters 22a, 22b are structured to form an array of first and second regions, with the first regions having said first transmission characteristics and being arranged over the first temperature sensors 4a and the second regions having said second transmission characteristics and being arranged over the second temperature sensors 4b.

In the embodiment of the process of Figs. 10 - 12, this is achieved by first structuring first filter 22a from the "first side" (as defined above) of separating layer 22c. This can e.g. be achieved using photolithography as well as an etching agent that is stopped at separating layer 22c. The structuring is such that, for the embodiment of Fig. 9, first filter 22a is removed at least in the region of the second temperature sensors 4b.

Now, filter wafer 31 is mounted to the spacers 20, which have already been applied to base wafer 30. Filter wafer 31 can be attached to the spacers 20 e.g. by gluing, soldering or bonding. Thus, a structure as shown in Fig. 11 is formed.

In a next step, carrier layer 21 is removed, e.g. by selective etching using an agent that is stopped by second filter 22b. Thus, second filter 22b is exposed.

Subsequently, second filter 22b can be structured from the "second side" (as defined above) of separating layer 22c. This can again be achieved using photolithography and a selective etching agent. The structuring is such that, for the embodiment of Fig. 9, second filter 22b is removed at least in the region of the first temperature sensors 4a. Advantageously, it is left standing only in the regions of the second temperature sensors 4b. Thus, a structure as shown in Fig. 12 is formed.

Finally, the sensor assembly can be separated (diced) along the lines 34 of Fig. 12 in order to form the individual sensors as shown in Fig. 7, with each sensor having a first and a second temperature sensor 4a, 4b. Prior to this, the parts of separating layer 22c at least at the location of the contact pads 14 have to be removed. This can e.g. be achieved by photolithography and subsequent etching. Alternatively, a mechanical cut through separating layer 22c can be applied along line 35 of Fig. 12.

### Manufacturing process 3

In order to manufacture a sensor of the type as shown in Fig. 15, a similar process as for the sensor of Fig. 13 can be used. However, section 22a-1 of the first filter can e.g. be formed by coating all of the bottom surface of separating layer 21 with a coating that later will form section 22a-1 and then removing said coating at the locations where section 22a-2 is to be placed. Such a removal can e.g. be carried out by means of lift-off or laser ablation techniques, as known to the skilled person. Then, all of the bottom side of the remaining structure can be coated with the material for section 22a-2, whereupon this material is removed at the locations of section 22a-1, e.g. again using laser ablation or lift-off techniques.

### Other manufacturing processes

For manufacturing the sensor of Fig. 13, basically the same process can be used as shown in Fig. 10 and 11, with subsequent cutting along the lines 34 and 35.

The sensor of Fig. 14 can be applied using the process of Fig. 10 - 12, but filter wafer 31 is applied from bottom side and not from the top side of wafer 1.

### Notes

The sensors can be packaged, e.g. by using conventional techniques, such as those described in DE 10 2004 002 163.

Spacer 20 as used in the examples of Figs. 6, 9 and 13 can be gas-tight, as mentioned above. Alternatively, it may also form a non-gas-tight connection, and may e.g. be formed by a structured polymer layer.

Separating layer 22c has been used as an etch stop for structuring one or both filters 22a, 22b. However, e.g. if filters 22a, 22b are, at least at their interface, of sufficiently different materials to allow selective etching, no separating layer is required.

Furthermore, carrier layer 21 can be designed to act as an infrared filter by itself. In this case, a single additional filter layer 22a is sufficient in order to form regions having first and second transmission characteristics as defined above. A suitable design of such a sensor would e.g. correspond to the one of Fig. 13 but without second filter 22b and separating layer 22c.

To improve the efficiency of the present device, the filter of the present sensor can be provided with an anti-reflection coating on one or both sides. In particular, if a topmost or bottommost layer of the filter is formed by a highly refractive material, such as silicon, it can be covered by a coating having a lower refractive index. Anti-reflection coatings are known to the skilled person.

If the device comprises a vacuum cavity 28, a getter for adsorbing gas molecules can be placed in the same for improving its vacuum maintaining capabilities. Such getters, which typically consist of a metal layer applied to an inner surface of the cavity under vacuum conditions, are also known to the skilled person.

## Claims

1. A method for manufacturing an infrared sensor comprising the steps of
providing a plurality of core sensors on a base wafer (30), wherein each core sensor comprises at least one temperature sensor (4), wherein the temperature sensors (4) are arranged on a top side of said base wafer (30),
mounting a filter wafer (31) to said base wafer (30), said filter wafer (31) covering said plurality of temperature sensors (4), thereby forming a sensor assembly, wherein, for each temperature sensor, said filter wafer (31) forms an infrared filter element (19),
wherein said filter wafer (31) comprises a carrier layer (21) and a filter layer (22),
wherein said filter wafer (31) is mounted to said base wafer (30) with said filter layer (22) facing said base wafer (30)
wherein said carrier layer (21) is etched off, and
separating said sensor assembly into a plurality of said infrared sensors.

2. The method of claim 1 wherein said filter wafer (31) is mounted from said top side (12a) of said substrate (1).

3. The method of claim 1 wherein said filter wafer (31) is mounted from a bottom side (12b) opposite said top side (12a) to said substrate (1).

4. The method of claim 1 wherein said carrier layer (21) is of silicon.

5. The method of any of the claims 1 to 4 comprising the steps of
structuring said filter layer (22) for generating an array of first regions having first transmission characteristics and an array of second regions having second transmission characteristics, wherein said first and said second transmission characteristics differ,
separating said sensor assembly such that each infrared sensor comprises at least a first and a second temperature sensor, wherein said first temperature sensor is attributed to one of said first regions of said filter layer (22) and wherein said second temperature sensor is attributed to one of said second regions of said filter layer (22).

6. The method of claim 5 wherein said filter layer (22) comprises a first filter (22a) having third spectral transmission characteristics and a second filter (22b) having fourth spectral transmission characteristics, wherein said third and said fourth spectral transmission characteristics differ from each other, wherein said first and said second filter extend over said filter wafer (31) and are located on top of each other, said method further comprising the steps of structuring at least one of said first and second filters (22a, 22b) for forming said first and second regions.

7. The method of claim 6 wherein said filter layer (22) further comprises a separating layer (22c) between said first and said second filters (22a, 22b), said method further comprising the step of using said separating layer (22c) as an etch stop when structuring at least one of said first and second filters (22a, 22b).

8. The method of claim 7 wherein
said first and said second filters (22a, 22b) consist of dielectric layers while said separating layer (22c) is a metal or semiconductor, in particular silicon, or wherein
said first and said second filters (22a, 22b) consist of metal and/or semiconductor layers while said separating layer (22c) is a dielectric.

9. The method of any of the claims 7 or 8 wherein said first filter (22a) is arranged on a first side of said separating layer (22c) and said second filter (22b) is arranged on a second side of said separating layer (22c), wherein said second side faces said carrier layer (21), said method further comprising the steps of
structuring said first filter (22a) from said first side,
removing said carrier layer (21), and structuring said second filter (22b) from said second side.

10. The method of claim 9 wherein said filter wafer (31) is applied to said base wafer (30) prior to removing said carrier layer (21).

11. The method of any of the claims 5 to 10 wherein said filter layer (22) comprises a first section (22a-1) and a second section (22a-2) having different transmission characteristics, and wherein said first section (22a-1) and said second section (22a-2) are applied to a common surface, and in particular wherein said first and said second sections (22a-1, 22a-2) are structured by laser ablation or lift-off.

## Patentansprüche

1. Verfahren zum Herstellen eines Infrarotsensors, enthaltend die Schritte
Bereitstellen einer Vielzahl von Basissensoren auf einem Basiswafer (3), wobei jeder Basissensor mindestens einen Temperatursensor (4) aufweist, wobei die Temperatursensoren (4) auf einer Oberseite des Basiswafers (30) angeordnet sind,
Anbringen eines Filterwafers (31) an dem Basiswafer (30), wobei der Filterwafer (31) die Vielzahl von Temperatursensoren (4) abdeckt, wodurch eine Sensoranordnung gebildet wird, wobei der Filterwafer (31) für jeden Temperatursensor ein Infrarotfilterelement (19) bildet,
wobei der Filterwafer (31) eine Trägerschicht (21) und eine Filterschicht (22) aufweist,
wobei der Filterwafer (31) mit der Filterschicht (22) dem Basiswafer (30) zugewandt an dem Basiswafer (30) angebracht wird,
wobei die Trägerschicht (21) weggeätzt wird, und
Auftrennen der Sensoranordnung in eine Vielzahl von Infrarotsensoren.

2. Verfahren nach Anspruch 1, bei dem der Filterwafer (31) zur Oberseite (12a) des Substrats (1) angebracht wird.

3. Verfahren nach Anspruch 1, bei dem der Filterwafer (31) zur der Oberseite (12a) gegenüberliegenden Unterseite (12b) an dem Substrat (1) angebracht wird.

4. Verfahren nach Anspruch 1, bei dem die Trägerschicht (21) aus Silizium ist.

5. Verfahren nach einem der Ansprüche 1 bis 4, enthaltend die Schritte
Strukturieren der Filterschicht (22) zum Erstellen einer Reihe von ersten Regionen mit ersten Übertragungseigenschaften und einer Reihe von zweiten Regionen mit zweiten Übertragungseigenschaften, wobei sich die ersten Übertragungseigenschaften von den zweiten Übertragungseigenschaften unterscheiden,
Auftrennen der Sensoranordnung derart, dass jeder Infrarotsensor zumindest einen ersten und einen zweiten Temperatursensor aufweist, wobei der erste Temperatursensor einer der ersten Regionen der Filterschicht (22) zugeordnet ist und wobei der zweite Temperatursensor einer der zweiten Regionen der Filterschicht (22) zugeordnet ist.

6. Verfahren nach Anspruch 5, bei dem die Filterschicht (22) ein erstes Filter (22a) mit dritten spektralen Übertragungseigenschaften und ein zweites Filter (22b) mit vierten spektralen Übertragungseigenschaften aufweist, wobei sich die dritten und die vierten spektralen Übertragungseigenschaften voneinander unterscheiden, wobei sich das erste und das zweite Filter über den Filterwafer (31) erstrecken und übereinander angeordnet sind, wobei das Verfahren weiter den Schritt des Strukturierens mindestens eines der Filter aus erstem und zweitem Filter (22a, 22b) zum Bilden der ersten und zweiten Regionen umfasst.

7. Verfahren nach Anspruch 6, bei dem die Filterschicht (22) weiter eine Trennschicht (22c) zwischen den ersten und zweiten Filtern (22a, 22b) enthält, wobei das Verfahren weiter den Schritt des Verwendens der Trennschicht (22c) als Ätzstopp beim Strukturieren von mindestens eines der Filter aus erstem und zweitem Filter (22a, 22b) umfasst.

8. Verfahren nach Anspruch 7, bei dem die ersten und zweiten Filter (22a, 22b) aus dielektrischen Schichten bestehen wohingegen die Trennschicht (22c) ein Metall oder ein Halbleiter ist, und insbesondere Silizium ist, oder wobei die ersten und zweiten Filter (22a, 22b)aus Metall und/oder Halbleiterschichten bestehen wohingegen die Trennschicht (22c) ein Dielektrikum ist.

9. Verfahren nach einem der Ansprüche 7 oder 8, bei dem das erste Filter (22a) auf einer ersten Seite der Trennschicht (22c) angeordnet ist und das zweite Filter (22b) auf einer zweiten Seite der Trennschicht (22c) angeordnet ist, wobei die zweite Seite der Trägerschicht (21) zugewandt ist, wobei das Verfahren weiter die Schritte umfasst
Strukturieren des ersten Filters (22a) von der ersten Seite her,
Entfernen der Trägerschicht (21), und
Strukturieren des zweiten Filters (22b) von der zweiten Seite her.

10. Verfahren nach Anspruch 9, bei dem der Filterwafer (31) an dem Basiswafer (30) vor dem Entfernen der Trägerschicht (21) angebracht wird.

11. Verfahren nach einem der Ansprüche 5 bis 10, bei dem die Filterschicht (22) einen ersten Abschnitt (22a-1) und einen zweiten Abschnitt (22a-2) mit unterschiedlichen Übertragungseigenschaften enthält, und bei dem der erste Abschnitt (22a-1) und der zweite Abschnitt (22a-2) auf eine gemeinsame Fläche angebracht werden, und insbesondere bei dem die ersten und zweiten Abschnitte (22a-1, 22a-2) strukturiert werden durch Laserablation oder Abheben.

## Revendications

1. Procédé de fabrication d'un capteur infrarouge comprenant les étapes consistant à :
fournir une pluralité de capteurs de coeur sur une plaquette de base (30), dans lequel chaque capteur de coeur comprend au moins un capteur de température (4), dans lequel les capteurs de température (4) sont agencés sur un côté supérieur de ladite plaquette de base (30),
monter une plaquette de filtre (31) sur ladite plaquette de base (30), ladite plaquette de filtre (31) recouvrant ladite pluralité de capteurs de température (4), en formant de ce fait un assemblage de capteurs, dans lequel, pour chaque capteur de température,
ladite plaquette de filtre (31) forme un élément de filtre infrarouge (19),
dans lequel ladite plaquette de filtre (31) comprend une couche de support (21) et
une couche de filtre (22),
dans lequel ladite plaquette de filtre (31) est montée sur ladite plaquette de base (30) avec ladite couche de filtre (22) faisant face à ladite plaquette de base (30),
dans lequel ladite couche de support (21) est enlevée par gravure, et
séparer ledit assemblage de capteurs en une pluralité desdits capteurs infrarouges.

2. Procédé selon la revendication 1, dans lequel ladite plaquette de filtre (31) est montée dudit côté supérieur (12a) dudit substrat (1).

3. Procédé selon la revendication 1, dans lequel ladite plaquette de filtre (31) est montée d'un côté inférieur (12b) opposé au dit côté supérieur (12a) sur ledit substrat (1).

4. Procédé selon la revendication 1, dans lequel ladite couche de support (21) est en silicium.

5. Procédé selon l'une quelconque des revendications 1 à 4, comprenant les étapes consistant à :
structurer ladite couche de filtre (22) pour générer un réseau de premières régions ayant des premières caractéristiques de transmission et un réseau de deuxièmes régions ayant des deuxième caractéristique de transmission, dans lequel lesdites
premières caractéristiques de transmission sont différentes desdites deuxièmes caractéristiques de transmission,
séparer ledit assemblage de capteurs de sorte que chaque capteur infrarouge comprenne au moins un premier capteur de température et un deuxième capteur de température, dans lequel ledit premier capteur de température est attribué à l'une desdites premières régions de ladite couche de filtre (22) et dans lequel ledit deuxième capteur de température est attribué à l'une desdites deuxièmes régions de ladite couche de filtre (22).

6. Procédé selon la revendication 5, dans lequel ladite couche de filtre (22) comprend un premier filtre (22a) ayant des troisièmes caractéristiques de transmission spectrale et un deuxième filtre (22b) ayant des quatrièmes caractéristiques de transmission spectrale, dans lequel lesdites troisièmes caractéristiques de transmission spectrale sont différentes desdites quatrièmes caractéristiques de transmission spectrale, dans lequel ledit premier filtre et ledit deuxième filtre s'étendent au-dessus de ladite plaquette de filtre (31) et se trouvent au-dessus l'un de l'autre, ledit procédé comprenant en outre les étapes consistant à structurer au moins l'un desdits premier et deuxième filtres (22a, 22b) pour former lesdites premières et deuxièmes régions.

7. Procédé selon la revendication 6, dans lequel ladite couche de filtre (22) comprend en outre une couche de séparation (22c) entre lesdits premier et deuxième filtres (22a, 22b), ledit procédé comprenant en outre l'étape consistant à utiliser ladite couche de séparation (22c) en tant que butée de gravure en structurant au moins l'un desdits premier et deuxième filtres (22a, 22b).

8. Procédé selon la revendication 7, dans lequel
lesdits premier et deuxième filtres (22a, 22b) se composent de couches diélectriques alors que ladite couche de séparation (22c) est un métal ou un semi-conducteur, en particulier du silicium, ou dans lequel
lesdits premier et deuxième filtres (22a, 22b) se composent de couches de métal et/ou semi-conducteur alors que ladite couche de séparation (22c) est un diélectrique.

9. Procédé selon la revendication 7 ou 8, dans lequel ledit premier filtre (22a) est agencé sur un premier côté de ladite couche de séparation (22c) et ledit deuxième filtre (22b) est agencé sur un deuxième côté de ladite couche de séparation (22c), dans lequel ledit deuxième côté fait face à ladite couche de support (21), ledit procédé comprenant en outre les étapes consistant à :
structurer ledit premier filtre (22a) depuis ledit premier côté,
enlever ladite couche de support (21), et
structurer ledit deuxième filtre (22b) depuis ledit deuxième côté.

10. Procédé selon la revendication 9, dans lequel ladite plaquette de filtre (31) est appliquée sur ladite plaquette de base (30) avant d'enlever ladite couche de support (21).

11. Procédé selon l'une quelconque des revendications 5 à 10, dans lequel ladite couche de filtre (22) comprend une première partie (22a-1) et une deuxième partie (22a-2) ayant différentes caractéristiques de transmission, et dans lequel ladite première partie (22a-1) et ladite deuxième partie (22a-2) sont appliquées sur une surface commune, et en particulier dans lequel lesdites première et deuxième parties (22a-1, 22a-2) sont structurées par ablation ou décollement au laser.
